# EUROPEAN PATENT SPECIFICATION

(11) **EP 1 484 208 B1**
(45) Date of publication and mention of the grant of the patent: **07.04.2010**
(21) Application number: 02807029.0
(22) Date of filing: 14.05.2002
(51) Int. Cl.: B60J 5/04

(54) **DOOR MODULE FOR MOTOR VEHICLES COMPRISING A WINDOW REGULATOR WITH LEVER**
TÜRMODUL FÜR KRAFTFAHRZEUGE MIT EINEM FENSTERHEBER MIT HEBEL
MODULE DE PORTIERE POUR AUTOMOBILES EQUIPE D'UN LEVE-VITRE A LEVIER

(30) Priority: 11.03.2002 ES 200200566
(43) Date of publication of application: 08.12.2004
(73) Proprietor: GRUPO ANTOLIN-INGENIERIA, S.A., 09007 Burgos (ES)
(72) Inventor: MARTINEZ MORAL, Francisco Javier, E-09004 Burgos (ES); GONZALES SAIZ, José Ignacio, E-09001 Burgos (ES)
(74) Representative: Capitan Garcia, Maria Nuria
(86) International application number: PCT/ES2002/000229
(87) International publication number: WO 2003/076219

(56) References cited:
- EP-A- 1 028 015
- EP-A- 1 138 535
- WO-A-00/23294
- ES-T- 2 103 995

## Description

This invention relates to a door module for automobiles equipped with a integrated arm-type window winder, within the scope of application of modular systems for doors in which any kind of the mechanical and electrical elements that can go inside a door can be integrated, and particularly in the door trim panel itself, and more specifically to systems that include window winder systems of the so called arm-type, while always respecting the structural integrity of the door.

This door module can include a large amount of items such as: window winder unit, lock, mechanical opening system, wiring, electrical controls, control electronics, loudspeakers, safety and energy absorption systems, waterproofing elements, ventilation ducts, brightwork, etc.

At present, as far as is known, there are different systems to integrate vehicle door components into one single modular unit.

There are, for instance, metallic or plastic based door subassemblies (door cassettes) that can include the door mechanisms, for example the window winder unit, lock, wiring, loudspeaker and waterproofing

Other structures are also known with an outer frame, which can include the outer frame of the door, the window glass, the rear view mirror and the window winder unit, which on occasions might include an internal substructure to strengthen the door.

Other systems, known as "support panels", which might include the door mechanisms, window winder unit and lock, the wiring, loudspeaker and waterproofing, energy absorption elements, as well as the panel with all its accessories, handles, knobs, brightwork, pockets, drive systems, lights, etc.

Among these so called support panels, a comprehensive advanced solution is known through WO-A-00/23294 in favor of the applicant, as it allows the integration of a greater number of components and especially the door trim panel itself.

None of these known techniques are designed to enable the door trim panel and an arm-type window winder unit to be integrated into the same door module, and at the same time respect the structural integrity of the vehicle door and, moreover, they do not allow the door trim panel to be removed independently while leaving the mechanical elements, window winder unit and lock fixed in the door in their operating position.

On this matter, we must indicate here that there are solutions which do allow the removal of the door trim panel, although they are not so complete and do not include the door trim panel as a constituent part of the door module, or which otherwise, in order to achieve them, require a series of modifications to be introduce in the door structure that affect key aspects of the automobile, such as the safety, design line, structural stability, acoustics or its constructive feasibility.

Another disadvantage of these techniques lies in the fact that the assembly kinematics is generally complex, because although it is carried out in one single operation, the positioning of the mechanisms and access to them is not totally visible to the operator, which means that their correct assembly depends to a great extent on the skill of this operator.

On the other hand, a large opening is required in the door shell in order to allow the insertion of the mechanisms during the assembly operation, which limits not only its design but also its very structural function.

The fundamental object of the present invention is to provide a door module to be fitted into a vehicle door with an integrating panel or door module that includes an arm-type window winder unit.

Another object of the invention is to provide an integrating panel or door module that includes an arm-type window winder unit, enables the bolting and fixing of the said arm-type window winder unit from the visible side during the assembly operation of the internal sheet steel of the door shell.

Another object of the invention is to provide a door module in which the support function is shared between the structure of the arm-type window winder unit and the door trim panel, allowing the functionality and integrity of the door module to be conserved throughout all the handling operations from its leaving the production line until its final assembly onto the vehicle door.

Another object of the invention is to provide a door module that enables the use of a small way of access to the door shell with respect to the design of the door structure.

This singularity is very important because there are some solutions on the market which, in view of their configuration, require some structural parts of the door to be eliminated in order to improve accessibility during assembly, thus considerably weakening the door structure and therefore needing to include internal reinforcements inside the door module itself in order to be able to comply with the different specifications.

In this solution, the door has a structure comparable to that of a traditional door, without needing to add other later elements supported by the door module, nor to eliminate key parts from either its structure or its style line.

In order to put these objectives into practice, the invention starts from a door trim panel that includes several items pre-assembled onto it, among which a single or double arm-type window winder stands out, while it can also support other items such as the lock, door opening system, wiring, control electronics, audio systems, passive safety, etc.

The door trim panel has an outer side which remains visible towards the passenger compartment of the vehicle and another inner side oriented towards the door shell. The door trim panel has a small opening, through which there is access towards the door shell and on its inner side it is equipped with a set of hooks created in the door trim panel itself so that it can be situated and fixed to the door shell.

In the proximity of the opening, the inner side of the door trim panel has at least one protuberance by way of a turret with a hollow interior and open on its larger side close to the outer side of the door trim panel. This protuberance, at least, is an element claimed by the present invention.

The arm-type window winder unit, for example the double arm unit, is previously assembled onto a support base that counts on the two articulated arms, the toothed sector, an upper bar connected to the two arms with two clips to receive the window glass, the handle for opening the door and the lock.

The support base has a elongated slot, along which the lock with the handle can move from an assembly position to a working position, some holes for it to be fixed to certain points of the door shell and at least one area onto which at least one of the turrets from the panel can be fixed.

When the window winder unit is assembled onto the support base, the support base can then be situated onto the inner side of the door trim panel, with the said support base being supported on at least one of the turrets protruding from the door trim panel.

After this, the support base can then be fixed by means of bolts to the door trim panel through at least one of the turrets.

In its preferred form, the turret is conical and its internal part also forms an also conical hollow space, so that it facilitates and perfectly guides the entry and extraction of the assembly bolts.

When the door module is thus fitted with the support base containing the arm-type window winder unit, it is presented against the door shell in order to fit the assembled unit, by securing first the door trim panel fixing points and then proceeding to assemble the other components included in the door module.

In order to assemble the door trim panel, the coupling hooks are inserted into the corresponding holes in the internal sheet steel of the door shell. Then, through the opening in the door trim panel and in a way which is visible, the operator proceeds to position and screw the window winder unit support onto the appropriate areas of the door shell.

Once the window winder unit and the door trim panel assembly is fitted, that is, once the door module is fitted, and if wishing to remove this unit, proceed to loosen and withdraw the bolts that fix the support base to the door shell, and if it is necessary to change only the door trim panel, leaving the window winder unit connected to the door shell, the bolts housed in the turret are the ones which are removed from the outer side of the door trim panel.

Given the preferred conical shape of the hollow inside the turret, the extraction of the connecting bolt from the support is carried out easily, preventing the bolt from falling inside the door shell.

The lock and the window winder unit handle are arranged in an elongated slot in the support base in such a way that two positions are permitted, one assembly position with the lock and handle towards the most inner part of the slot and another operating position with both components at the most outer end of the slot in the final position for use. This method of operation was already described with application WO-A-00/23294.

The support base connected to the turret and including the arm-type window winder unit can have any kind of surface shape, with the ends of the hollow turret(s) adapting to this shape, so that the said support base remains in an operating position when the door trim panel is assembled in the door shell.

Therefore, when there are two or more turrets, they can be of different lengths in order to adapt to the different distances between the surface of the support base and the assembly area of the door shell, so that this remains in its operating position.

All the details of the invention can be appreciated on the accompanying sheets of drawings, on which the following are represented:
Figure 1 is a perspective view of the door trim panel in accordance with the invention, seen on the inner side that faces the door shell, respectively.
Figure 2 is a vertical cross section of a turret to fit the support base to the door trim panel.
Figures 3 and 4 represent two perspective views of the arm-type window winder unit, seen from the door trim panel or from the door shell, respectively.
Figure 5 is a perspective view of the door module from the outer side of the door trim panel.
Figure 6 is another different perspective view of the door module, also from the outer side of the door trim panel.
Figure 7 represents a view of the door trim panel - window winder unit assembly from the inner side of the door trim panel, with the lock and handle in the provisional assembly position.
Figure 8 also represents a view of the door trim panel - window winder unit assembly from the inner side of the door trim panel, with the lock and handle in their final position for use on the door.
Figure 9 shows the design of the inner side of the door that completes the system.

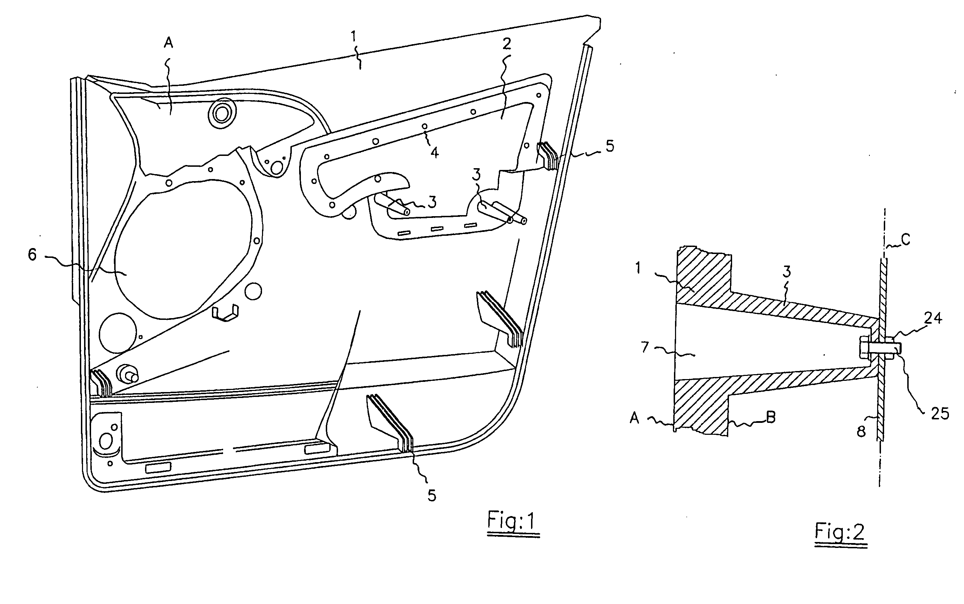

Looking now at Figure 1, we can appreciate the door trim panel (1) with its inner side (A) towards the door shell (28), which is equipped with a set of hooks (5) for hanging and previous positioning in the said door shell (28), as well as several ribs and cavities (6) for situating other elements, for example a loudspeaker.

Prominent in this Figure 1 is the small opening (2) that enables access for tools towards the door shell (28), with the holes (4) which, after assembly of the door trim panel (1), will be used for fixing the boss that closes off the said opening (2).

In the proximity of the opening (2) it is possible to appreciate the conical turrets (3) responsible for fixing the support base (8) on which the arm-type window winder unit (26) is assembled to the door trim panel (1). The number of turrets (3) is variable, although it is pointed out once again that at least one of them is necessary in accordance with the concept of the invention.

The vertical longitudinal cross section of the turrets (3) is illustrated in Figure 2, with their preferable conical shape, that provides an internal cavity (7). These turrets (3) open out at the outer side (A) of the door trim panel (1) to surpass the inner side (B), extending for a distance that culminates at a rear plane (C), which will be occupied by the support base (8) that receives the arm-type window winder unit (26) in this case.

In the same Figure 2 we can observe the holed closure at the end of the conical turret (3) in order to allow the bolt (25) to pass, connected in this case to the nut (24) fixed to the support base (8) to prevent it from falling when the bolt (25) is extracted.

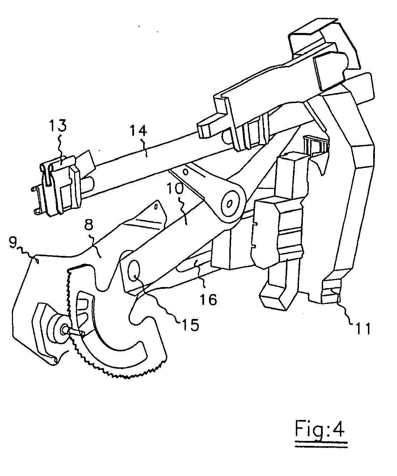

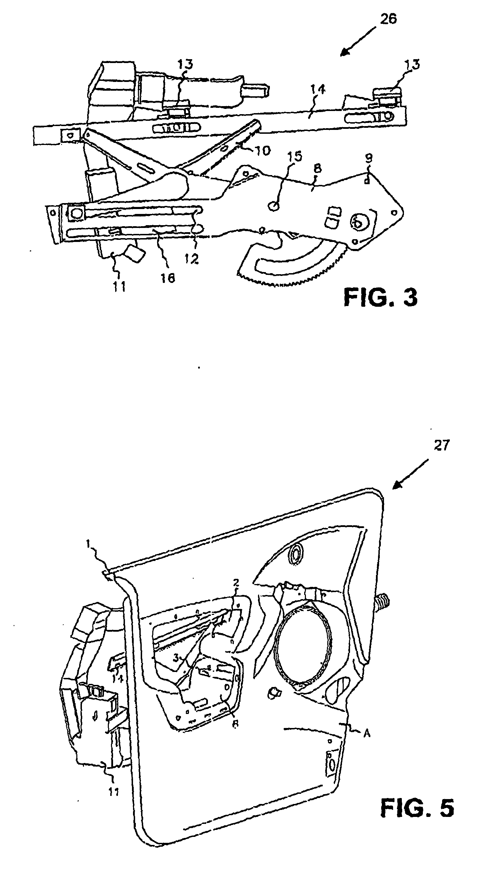

In accordance with Figures 3 and 4, we can observe the arm-type window winder unit (26) with its arms (10) connected in an articulated manner to the profile (14) that holds the elements (13) for connection to the window glass: clipping or bolting drive slide clips, etc., not illustrated. This window winder unit (26) is fixed to the support base (8) through the articulation (15), which has a first slot (12) in which the end of one of the arms (10) of the window winder unit (26) can move.

The support base (8) has a second slot (16) on which it is secured during the transport and assembly of the door module (27) and on which the lock (11) connected to the operating handle (13) can move.

The support base (8) has several holes (9) so that this assembly can be fixed to the points determined in the door shell (28), and access can be gained to these through the opening (2) in the door trim panel (1).

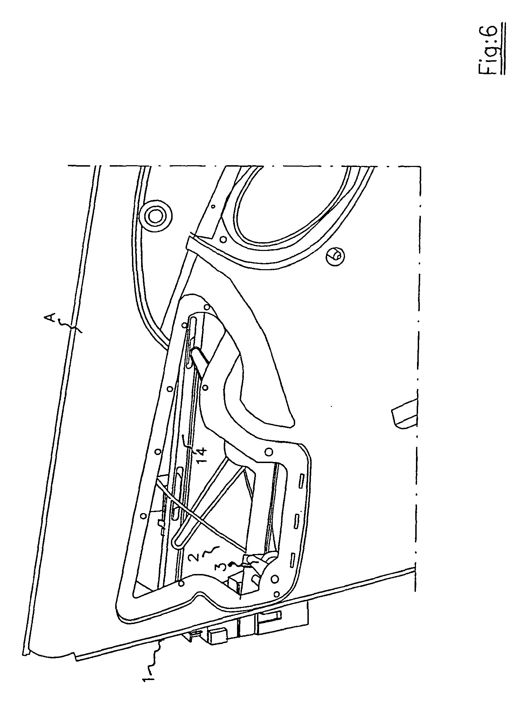

In accordance with Figures 5 and 6, it is possible to appreciate the visible outer side (A) of the door trim panel (1) and, behind this, the window winder unit (26) seen through the opening (2), as well as the end of the lock (11) and handle. The turrets (3) represented here are connected to the support base (8), so that a stable unit is formed, which is fixed to the door shell (28), with access to the fixing points being gained through the opening (2), and by means of bolts hat pass through the holes (9) in the said support base (8).

Once this operation has been carried out, the opening (2) is then covered with the corresponding boss, either independent or hinged to the door trim panel (1) itself, exactly as defined in WO-A-00/23294.

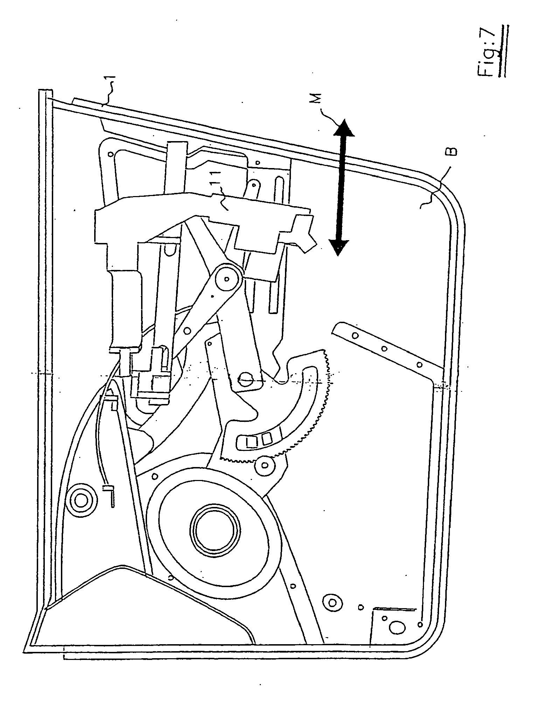

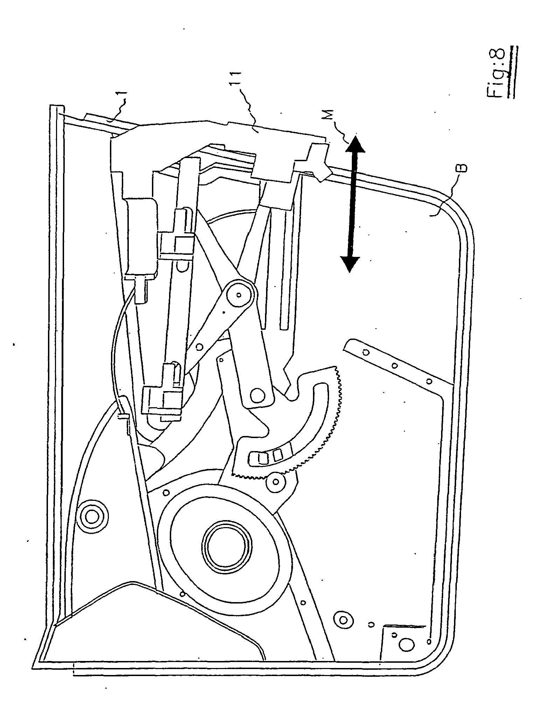

In accordance with Figures 7 and 8, we can observe the inner side of the assembly of the door trim panel (1) - window winder unit (26) or door module (27), in a unit prepared for fixing to the door shell (28). In Figure 7, the lock (11) is in its assembly position, whereas in Figure 8 the lock (11) has moved along the second slot (16) in the support base (8) as indicated by (M) to what will be its final location once assembled on the door shell (28).

In the door module (27) of the invention, it has been found that with at least one single conical turret (3), sufficient fixing is created between the door trim panel (1) and the support base (8). Nevertheless, the possibility also enters into the invention of counting on more than one turret (3), all according to requirements.

The turret (3), or the turrets, stand out in the proximity of the opening (2) and will preferably be made of the same material as the door trim panel (1).

At least one turret (3) can possibly be formed by another independent body and connected to the door trim panel (1), which allows access to its interior through the outer side (A) of this door trim panel (1).

In some cases, a turret (3) might have an interior shape which is not conical, although it is pointed out here for the appropriate purposes that this conical solution is the one preferred in accordance with the invention.

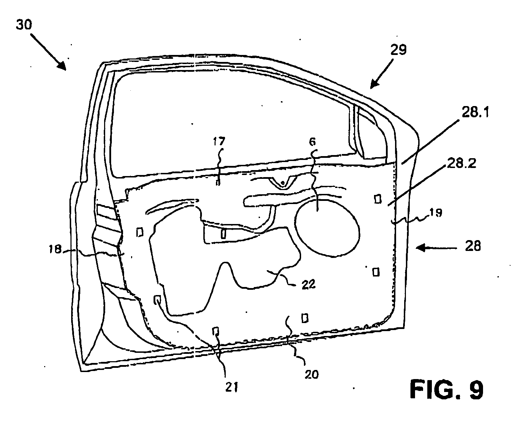

In Figure 9 shows a door (30) which comprises:
- a lower part called door shell (28) comprising an outer metal panel (28.1) fixed to an inner metal panel (28.2), said inner metal panel (28.2) having an opening (22) therein, said door shell (28) defining a hollow cavity,
- And an upper part called window frame (29).
- The inner side of the door (30) makes it possible to observe that not only the upper and lower reinforcements (17, 20) in the area of the door window weatherstrip but also the forward and rear reinforcements (19, 18) of the areas close to the hinges and lock are maintained inside the door shell (28). This configuration enables a structural response in accordance with the regulations in force without needing to add any supplementary reinforcement supported by the door module (27).

In this same Figure 9, we can also observe the cavity (6) for the loudspeaker, the opening (22) for the assembly of the window winder unit (26) and the various holes (21) for the coupling of the door trim panel (1), all of which is carried out in the inner panel (28.2) of the door (30) that closes off the door shell (28) and on which the door trim panel (1) of the door module (27) is mounted.

## Claims

1. Door module for automobile having;
- a door trim panel (1) with an outer side (A) towards the passenger compartment and an inner side (B) towards a door shell (28) of the automobile door (30),
- an arm-type window winder unit (26), a lock (11) and a window winder drive system,
**characterized in that** the door module (27) comprises:
- a support base (8) for the window winder unit (26) connected to the door trim panel (1) and for fixing to the door shell (28),
- an opening (2) made in the door trim panel (1) for the assembly of the support base (8) to the said door shell (28),
- at least one hollow turret (3) that protrudes from the inner side (B) of the door trim panel (1), whose interior is reached from the outer side (A) of the door trim panel (1), with the turret (3) in the proximity of the opening (2) standing out, and **in that**,
the arm-type window winder unit (26) is mounted on the support base (8), which in turn is connected to the free end of the at least one hollow turret (3) by means of a bolt coming from the outer side (A) of the door trim panel (1),
wherein the support base (8) has holes (9) for fixing to the door shell (28),
the support base (8) is connected to the door trim panel (1) by the at least one hollow turret (3) being in its mounted position when the door trim panel (1) is assembled in the door shell (28), so that
the door module (27) allows the joint assembly of all the elements for be incorporated into the automobile door (30), with the exception of the window glass, and subsequently allows, when required, the removal either of the door module (27) or otherwise only the door trim panel (1), independently, and its related components, while leaving the arm-type window winder unit (26), lock (11) and window winder drive system fitted onto the door (30), respecting the structural integrity of the automobile door (30) itself.

2. Door module for automobile, in accordance with claim 1, **characterised in that** said at least one hollow turret (3) has a conical shaped internal cavity (7), with its larger end towards the outer side (B) of the door trim panel (1).

3. Door module for automobile, in accordance with claim 1, **characterised in that** the said at least one hollow turret (3) is made out of the same material as the door trim panel (1) and created from this door trim panel (1).

4. Door module for automobile, in accordance with claim 1, **characterised in that** the said at least one hollow turret (3) is made independently of the door trim panel (1).

5. Door module for automobile, in accordance with claim 1, **characterised in that** more than one hollow turret (3) is provided, with each one protruding appropriately until their connection with the support base (8), so that the support base (8) remains in its mounted position in relation to the door shell (28).

6. Door module for automobile, in accordance with claim 1, **characterised by** the absence of structural reinforcing parts in order to pass the structural and safety specifications of vehicles.

7. Automobile door with a suitable configuration to be able to hold a door module in accordance with claim 1, **characterised in that** the door module (27) enables the assembly and removal of the door module (27) while the door shell (28) maintains not only its upper reinforcement (17) but also its forward and rear reinforcements (18, 19) in such a way that it all the fulfills safety regulations without adding any supplementary reinforcement.

8. Door module in accordance with claim 1, **characterised by** being able to incorporate all the mechanical elements connected in the same door module (27), ready to fulfill all their functions once the door module (27) is mounted on the vehicle door (30) and to be able to check the condition of the elements before their assembly into the vehicle.

9. Door module in accordance with claim 1, **characterised by** being able to incorporate all the electrical elements interconnected in the same door module (27), ready to be able to fulfill all their use functions and to be able to check the condition of the elements before their assembly into the vehicle.

## Patentansprüche

1. Kraftfahrzeug-Türmodul mit
- einem Türverkleidungsblech (1) mit einer zum Fahrgastraum gerichteten Außenseite
(A) und einer zum Türkasten (28) der Fahrzeugtür (30) gerichteten Innenseite (B),
- einer Scheren-Fensterhebereinheit (26), einer Verriegelung (11) und einem Fensterheberantrieb,
**dadurch gekennzeichnet, dass** das Türmodul (27) umfasst:
- eine am Türverkleidungsblech (1) angebrachte Grundplatte (8) für die Fensterhebereinheit (26) und zur Befestigung am Türkasten (28),
- eine im Tür-Verkleidungsblech (1) angebrachte Öffnung (2) zur Montage der Grundplatte (8) am Türkasten (28),
- mindestens eine hohle Säule (3), die von der Innenseite (B) des Türverkleidungsblechs (1) vorsteht und deren Innenraum von der Außenseite (A) des Türverkleidungsblechs (1) zugänglich ist, wobei die Säule (3) in der Nähe der Öffnung (2) vorsteht,
und dass
die Scheren-Fensterhebereinheit (26) auf der Grundplatte (8) montiert ist, die ihrerseits mit dem freien Ende der mindestens einen hohlen Säule (3) mittels eines von der Außenseite (A) des Türverkleidungsblechs (1) kommenden Bolzens verbunden ist, wobei die Grundplatte (8) Bohrungen (9) zur Befestigung am Türkasten (28) aufweist, die Grundplatte (8) mit dem Türverkleidungsblech (1) mittels der mindestens einen hohlen Säule (3) in ihrer Einbaustellung verbunden ist, in welcher das Türverkleidungsblech (1) am Türkasten (28) angebracht ist, so dass das Türmodul (27) den gemeinsamen Einbau aller in die Fahrzeugtür (30) einzubauenden Elemente mit Ausnahme der Fensterscheibe gestattet und demzufolge bei Bedarf die Abnahme des Türmoduls (27) oder unabhängig davon allein des Türverkleidungsblechs (1) und der damit verbundenen Komponenten ermöglicht, während die Scheren-Fensterhebereinheit (26), die Verriegelung (11) und der Fensterheberantrieb an der Tür (30) befestigt bleiben und so die strukturelle Integrität der Fahrzeugtür (30) selbst gewahrt bleibt.

2. Kraftfahrzeug-Türmodul nach Anspruch 1, **dadurch gekennzeichnet, dass** die mindestens eine hohle Säule (3) einen konisch geformten Innenraum (7) aufweist, dessen weiteres Ende zur Außenseite (B) des Türverkleidungsblechs (1) gerichtet ist.

3. Kraftfahrzeug-Türmodul nach Anspruch 1, **dadurch gekennzeichnet, dass** die mindestens eine hohle Säule (3) aus demselben Material wie das Türverkleidungsblech (1) hergestellt und aus dem Türverkleidungsblech (1) geformt ist.

4. Kraftfahrzeug-Türmodul nach Anspruch 1, **dadurch gekennzeichnet, dass** die mindestens eine hohle Säule (3) unabhängig vom Türverkleidungsblech hergestellt ist.

5. Kraftfahrzeug-Türmodul nach Anspruch 1, **dadurch gekennzeichnet, dass** mehr als eine hohle Säule (3) vorgesehen ist, von denen jede bis zu ihrer Verbindung mit der Grundplatte (8) geeignet vorsteht, so dass die Grundplatte (8) in ihrer eingebauten Position in Bezug auf den Türkasten (28) verbleibt.

6. Kraftfahrzeug-Türmodul nach Anspruch 1, **gekennzeichnet durch** das Fehlen strukturverstärkender Teile, um den Struktur- und Sicherheitsspezifikationen für Fahrzeuge zu genügen.

7. Kraftfahrzeugtür mit einer geeigneten Konfiguration zur Aufnahme eines Türmoduls nach Anspruch 1, **dadurch gekennzeichnet, dass** der Türmodul (27) den Ein- und Ausbau des Türmoduls (27) gestattet, wobei am Türkasten (28) nicht nur die obere Verstärkung (17) sondern auch die vorderen und hinteren Verstärkungen (18, 19) verbleiben, so dass dieser allen Sicherheitsvorschriften ohne Hinzufügen zusätzlicher Verstärkungen genügt.

8. Türmodul nach Anspruch 1, **dadurch gekennzeichnet, dass** dieser zur Aufnahme aller im Türmodul (27) eingebauten mechanischen Elemente geeignet ist und diese nach Einbau des Türmoduls (27) in die Fahrzeugtür (30) vollständig funktionsfähig sind und der Zustand der Elemente vor deren Einbau in das Fahrzeug prüfbar ist.

9. Türmodul nach Anspruch 1, **dadurch gekennzeichnet, dass** dieser zur Aufnahme aller elektrischen Elemente in zusammengeschaltetem und vollständig funktionsfähigem Zustand im Türmodul (27) geeignet ist, wobei der Zustand der Elemente vor deren Einbau in das Fahrzeug prüfbar ist.

## Revendications

1. Module de portière pour véhicule automobile ayant
- un panneau de garnissage de portière (1) avec un côté extérieur (A) orienté vers l'habitacle et un côté intérieur (B) orienté vers un battant de portière (28) de la portière (30) d'automobile,
- une unité de lève-vitre du type à bras (26), un verrou (11) et un système de commande de lève-vitre,
**caractérisé en ce que** le module de portière (27) comprend :
- une base de support (8) pour l'unité de lève-vitre (26) connectée au panneau de garnissage de portière (1) et pour être fixée au battant de portière (28),
- une ouverture (2) aménagée dans le panneau de garnissage de portière (1) pour l'assemblage de la base de support (8) audit battant de portière (28),
- au moins une tourelle creuse (3) en porte-à-faux à partir du côté intérieur (B) du panneau de garnissage de portière (1), dont l'intérieur est atteint à partir du côté extérieur (A) du panneau de garnissage de portière (1), avec la tourelle (3) à proximité de l'ouverture (2) saillante.
et **en ce que**
- l'unité de lève-vitre de type à bras (26) est montée sur la base de support (8), laquelle à son tour est connectée à l'extrémité libre de la au moins une tourelle creuse (3) au moyen d'un boulon provenant du côté extérieur (A) du panneau de garnissage de portière (1), dans lequel la base de support (8) possède des trous (9) pour se fixer au battant de portière (28),
- la base de support (8) est connectée au panneau de garnissage de portière (1) par au moins une tourelle creuse (3) qui se trouve dans sa position de montage lorsque le panneau de garnissage de portière (1) est assemblé dans le battant de portière (28), de manière que le module de portière (27) permette l'assemblage de jonction de tous les éléments à incorporer dans la portière (30) de véhicule automobile, à l'exception du verre pour vitre, et permettre en conséquence, lorsque cela est nécessaire, le retrait soit du module de portière (27), soit seulement du panneau de garnissage de portière (1), de manière indépendante, et ses composants correspondants, tout en laissant l'unité de lève-vitre de type à bras (26), le verrou (11) et le système de commande du lève-vitre montés sur la portière, en respectant l'intégrité structurale de la propre portière (30).

2. Module de portière pour véhicule automobile, selon la revendication 1, **caractérisé en ce que** ladite au moins une tourelle creuse (3) possède une cavité (7) interne à forme conique, avec son extrémité plus grande orientée vers le côté extérieur (B) du panneau de garnissage de portière (1).

3. Module de portière pour véhicule automobile, selon la revendication 1, **caractérisé en ce que** ladite au moins une tourelle creuse (3) est constituée par la même matière que le panneau de garnissage de portière (1) et est créée à partir de ce panneau de garnissage de portière (1).

4. Module de portière pour véhicule automobile, selon la revendication 1, **caractérisé en ce que** ladite au moins une tourelle creuse (3) est réalisée indépendamment du panneau de garnissage de portière (1).

5. Module de portière pour véhicule automobile, selon la revendication 1, **caractérisé en ce qu'**il est prévu plus d'une tourelle creuse (3), chacune d'elle étant de manière appropriée en porte-à-faux jusqu'à sa connexion avec la base de support (8), de manière à ce que la base de support (8) demeure dans sa position de montage en relation avec battant de portière (28).

6. Module de portière pour véhicule automobile, selon la revendication 1, **caractérisé par** l'absence de pièces de renfort structural afin de satisfaire les spécifications structurales et de sécurité des véhicules.

7. Portière de véhicule automobile avec une configuration appropriée apte à maintenir un module de portière selon la revendication 1, **caractérisé en ce que** le module de portière (27) permet l'assemblage et le retrait du module de portière (27) pendant que le montant de portière (28) maintient non seulement son renfort supérieur (17) mais également ses renforts avant et arrière (18, 29) de manière à satisfaire toutes les réglementations de sécurité, sans ajouter aucun renfort supplémentaire.

8. Module de portière selon la revendication 1, **caractérisé en ce qu'**il est apte à incorporer tous les éléments mécaniques connectés dans le même module de portière (27) prêts à satisfaire toutes leurs fonctions une fois que le module de portière (27) se trouve monté sur la portière de véhicule (30) et apte à vérifier la condition des éléments avant leur assemblage dans le véhicule.

9. Module de portière selon la revendication 1, **caractérisé en ce qu'**il est apte à incorporer tous les éléments électriques interconnectés dans le même module de portière (27) prêts à pouvoir satisfaire toutes leurs fonctions d'utilisation et apte à vérifier la condition des éléments avant leur montage dans le véhicule.
